# EUROPÄISCHE PATENTSCHRIFT

(11) **EP 0 702 617 B1**
(45) Veröffentlichungstag und Bekanntmachung des Hinweises auf die Patenterteilung: **28.11.2001**
(21) Anmeldenummer: 95914333.0
(22) Anmeldetag: 30.03.1995
(51) Int. Cl.: B28B 7/22, E04H 5/04

(54) **VERFAHREN ZUM HERSTELLEN EINER MONOLITHISCHEN BETONRAUMZELLE UND MONOLITHISCHE BETONRAUMZELLE**
PROCESS FOR PRODUCING A MONOLITHIC CONCRETE CELL AND MONOLITHIC CONCRETE CELL THUS PRODUCED
PROCEDE DE FABRICATION D'UNE CELLULE MONOLITHIQUE EN BETON ET CELLULE MONOLITHIQUE EN BETON AINSI FABRIQUEE

(30) Priorität: 30.03.1994 DE 4411196
(43) Veröffentlichungstag der Anmeldung: 27.03.1996
(73) Patentinhaber: Betonbau GmbH, D-68753 Waghäusel (DE)
(72) Erfinder: PRIMUS, Illo-Frank, D-76327 Pfinztal (DE); SCHOLER, Norbert, D-76297 Stutensee-Friedrichstal (DE)
(74) Vertreter: Hiebsch, Gerhard F., Dipl.-Ing.
(86) Internationale Anmeldenummer: EP9501194
(87) Internationale Veröffentlichungsnummer: WO9526862

(56) Entgegenhaltungen:
- EP-A- 0 506 603
- DE-A- 2 513 643
- DE-A- 2 617 504
- DE-U- 1 808 360
- FR-A- 2 565 885
- FR-A- 2 665 207
- US-A- 2 324 326
- US-A- 3 894 711

## Beschreibung

Die Erfindung betrifft ein Verfahren zum Herstellen einer - - wenigstens zwei durch eine Zwischenwand getrennte Räume enthaltenden -- monolithischen Raumzelle aus Beton nach dem Oberbegriff des Patentanspruches 1. Zudem erfaßt die Erfindung eine monolithische Betonraumzelle mit einem Boden oder einer Decke und vier Umfassungswänden, welche nach dem vorstehenden Verfahren gegossen ist.

Die EP-A-0 506 603 beschreibt ein gattungsgemäßes Verfahren und die dafür herangezogenen Schalungselemente zum Gießen einer Betonraumzelle mit Armierungskäfig, in welche gegebenenfalls Zwischenwände gesondert eingesetzt werden können, die jeweils zwei benachbarte Räume voneinander trennen. Hierzu kann aus der Bodenplatte eine Schwelle herausgeformt sein, auf welche dann eine vorgefertigte Betonplatte als Zwischenwand eingeschwenkt wird. Zu dieser enden innenseitig von den Außenwänden abragende -- monolithisch angegossene -- bodenparallele Konsolenleisten in Abstand.

Durch die US-A-3,894,711 ist ein aus Beton gefertigtes Wohngebäude bekanntgeworden, das auf einem -- mit einer Folie abgedeckten -- Geröllbett dadurch errichtet wird, dass man zuerst eine Bodenplatte gießt und dann auf diese faltbare Schalungswände für die Außen- und Zwischenwände stellt. Die Betonwände können nach Aussage des Autors dieser Schrift dann gegossen werden, bevor der Beton der Bodenplatte vollständig ausgehärtet ist, so dass zwischen dieser und den Wänden eine Art Versiegelung entsteht.

In der Praxis hat sich gezeigt, daß die Dichtigkeit derartiger Raumzellen im Bereich der Zwischenwandanschlüsse für den Einsatz von Gasstationen nicht ausreicht, weshalb sich der Erfinder das Ziel gesetzt hat, die Gasdichtigkeit von Raumzelleninnenwänden zu erhöhen. Zudem sollen Herstellung und Funktion der Wandleisten verbessert werden.

Erfindungsgemäß wird diese Aufgabe durch ein Verfahren gemäß Patentanspruch 1 bzw. eine Betonraumzelle gemäß Patentanspruch 5 gelößt, die Unteransprüche geben günstige Weiterbildungen an.

Erfindungsgemäß wird in die -- von ihrem Armierungskäfig bestimmte -- Raumzelle vor dem Gießen der Umfassungswände wenigstens eine Zwischenwand eingegossen und anschließend in noch nassem Frischbetonzustand monolithisch mit den Umfassungswänden und dem Boden oder der Decke verbunden; das Gießen der Zwischenwand erfolgt mit ihr beidseits zugeordneten und verfahrbar eingebauten Schaltafeln. Dank dieser Maßgabe entsteht auf bestechend einfache Weise eine gasdicht in die Raumzelle integrierte Zwischenwand.

Als günstig hat es sich erwiesen, beidseits der Zwischenwand eine verschiebliche Kernschalwand für eine Fläche der Zwischenwand sowie einen zu ihr in Abstand zu bringenden Schalungskern für die Umfassungswände samt in diese übergehender Boden- oder Deckenplatte anzuordnen.

Nach einem weiteren Merkmal der Erfindung können an wenigstens zwei einander gegenüberliegende Umfangswände -- und/oder an eine Umfangswand sowie die gegenüberliegende Fläche der Zwischenwand -- während des Betonierens bodenparallel bzw. horizontal Wandleisten und/oder rechtwinkelig dazu verlaufende Wandvorlagen angeformt werden.

Im Rahmen der Erfindung liegt eine monolithische Raumzelle aus Beton, deren Zwischenwand/Zwischenwände an die Umfassungswände und die Boden- oder Deckenplatte gasdicht anbetoniert ist/sind und bei der als Wandleisten an wenigstens zwei gegenüberliegende Wandflächen parallel zur Zwischenwand verlaufende Wandvorlagen angeformt sind. Diese können sich von der jeweils zugeordneten Wandfläche ab querschnittlich verjüngen.

Als günstig hat es sich erwiesen, daß die Wandvorlagen des Transformatorenraumes etwa die doppelte Frontbreite der Wandvorlagen im Schaltraum aufweisen und eine gute Auflage für Trafoschienen anbieten. Ansonsten sollen die Wandvorlagen des Schaltraumes zueinander gleiche Abstände aufweisen und die Endabstände zu den seitlich begrenzenden Wänden etwa das 1,5fache davon messen.

Die Erfindung bietet zur Herstellungsvereinfachung zudem ein Rastersystem der Längswände im Bereich des Schaltraumes und eine zwischen den Endabständen abnehmende Anzahl der Wandvorlagen gleichbleibender Abstände an.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: einen Längsschnitt durch eine als Transformatorenstation dienende monolithisch gegossene Raumzelle ohne Dach, mit Umfassungswänden und einer Zwischenwand;
- Fig. 2:: einen vergrößerten Ausschnitt einer Umfassungswand mit angeformter Konsolenleiste;
- Fig. 3:: einen Querschnitt durch ein Wandeck mit Konsolenleisten;
- Fig. 4:: die Draufsicht auf die Raumzelle der Fig. 1;
- Fig. 5:: die Frontansicht auf die Innenfläche einer Umfassungswand der Raumzelle gemäß Pfeilrichtung V der Fig. 4;
- Fig. 6:: eine Schrägsicht auf einen Teil eines Schalungskerns für die Raumzelle;
- Fig. 7:: die Raumzelle im Längsschnitt mit aufwärts weisender Bodenplatte während eines Herstellungsvorganges;
- Fig. 8:: einen Längsschnitt durch eine andere monolithisch gegossene Raumzelle mit Wandvorlagen;
- Fig. 9:: eine gegenüber Fig. 8 vergrößerte Schemaskizze für die Anordnung von Wandvorlagen an einer Umfassungswand von Raumzellen;
- Fig. 10:: einen Teilquerschnitt durch die Innenschalung zu Fig. 8,9;
- Fig. 11:: den gegenüber Fig. 10 vergrößerten Querschnitt durch eine Wandvorlage mit Innenschalung;
- Fig. 12:: einen Querschnitt durch einen Eckanschluß oder Eckstiel der Innenschalung;
- Fig. 13;14:: Skizzen zu Bewegungsstadien des Eckanschlusses.

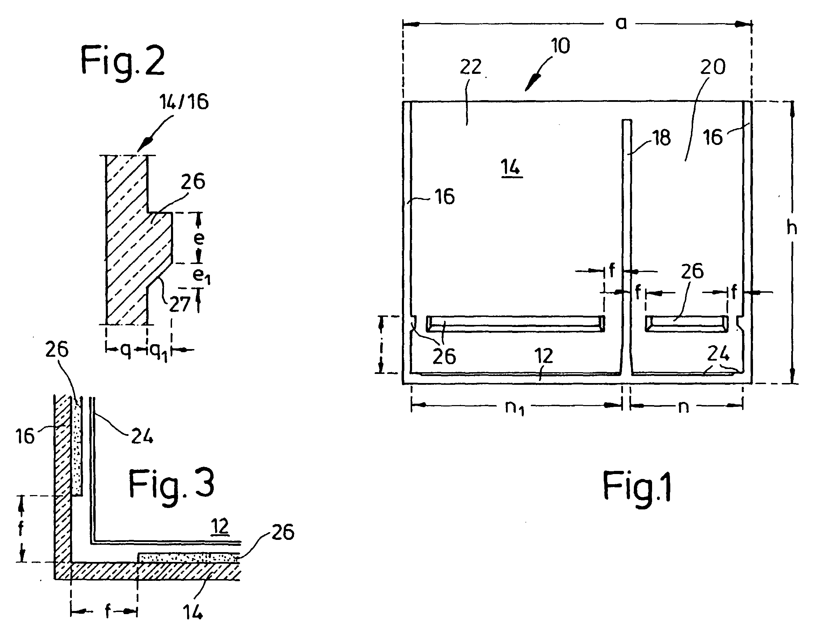

Bei einer Raumzelle 10 einer äußeren Länge a von beispielsweise 420 cm und einer äußeren Breite b von hier 270 cm aus einer Bodenplatte 12 sowie an diese angegossenen -- nachfolgend auch als Umfassungswände bezeichneten -- Längswänden 14 und Querwänden 16 der Höhe h von 330 cm ist in Abstand n von 135 cm zu der in Fig. 1, 3 rechten Querwand 16 parallel zu dieser eine Zwischenwand 18 gasdicht angeformt, deren Abstand n₁ zur anderen Querwand 16 hier 253 cm mißt. Die Zwischenwand 18 teilt die Raumzelle 10 in eine schmale Transformatorenkammer 20 und einen größeren Schaltraum 22.

Im Eckbereich zwischen Bodenplatte 12 und Umfassungswänden 14, 16 läuft ein Sockelabsatz 24 um. In einer Höhe i von 68 cm über der Bodenplatte 12 sind den Umfassungswänden 14, 16 leistenförmige Konsolen 26 als Auflager angeformt, deren jede zur seitlich benachbarten Wand 14, 16 oder 18 in einem Abstandsmaß f von beispielsweise 18 cm endet.

Fig. 2 zeigt den vergrößerten Querschnitt eines Teiles einer Umfassungswand 14 oder 16 der Breite q von 10 cm mit der angeformten Konsolenleisten 26 einer Kragbreite q₁ von 6 cm, an deren oberen geraden Konsolenabschnitt einer Höhe e von 11,5 cm ein pultartig zur Umfassungwand 14, 16 abwärts geneigter Sockelabschnitt 27 der Konsolenleiste 26 einer Höhe e₁ von 6 mm anschließt.

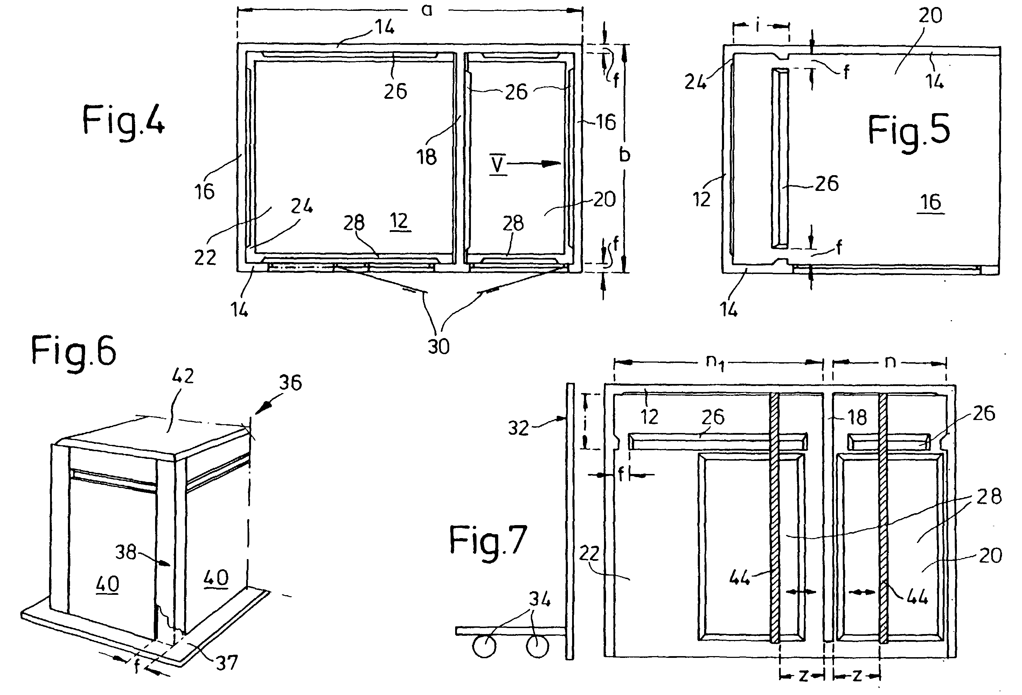

Die Fig. 4 und 7 lassen erkennen, daß in einer Längswand 14 oberhalb der -- gegebenenfalls auch von der Zwischenwand 18 abragenden -- Konsolenleisten 26 Türöffnungen 28 für Schwenktüren 30 angeordnet sind.

Zum Gießen der Raumzelle 10 wird eine Außenschalung aus vier -- gegebenenfalls jeweils aus mehreren Abschnitten bestehenden und zusammengeführten -- Schaltafeln 32 auf Rollen 3 -- eingesetzt.

Eine der Außenschalung in Abstand zugeordnete Innenschalung besteht aus zwei Schalungskernen für die Umfassungswände 14,16, von denen einer in Fig. 6 bei 36 angedeutet ist. Er ruht auf nicht wiedergegebenen Stützen, ist von einem umlaufenden, an die Außenschalung anschließbaren Bodenrahmen 37 umgeben und kann nach außen ragende Einsätze für die erwähnten Türöffnungen aufweisen. Dieser Schalungskern 36 ist in sich faltbar und weist vier querschnittlich winkelförmige Eckstiele 38 auf, die jeweils an zwei benachbarte Schalwandtafeln 40 so angrenzen, daß die Querschnittslänge der Schenkel des Eckstiels 38 geringfügig kürzer ist als das Abstandsmaß f zwischen einem Ende der Konsolenleiste 26 und der nächstliegenden Wand 14,16 oder 18. Die klappbaren Schalwandtafeln 40 enthalten Formrinnen 41 für die Konsolenleisten 26. Der Schalungskern 36 wird durch einen Deckenspiegel 42 als Innenschalung für die Bodenplatte 12 der Raumzelle 10 ergänzt.

Zum Gießen der Zwischenwand 18 werden beidseits deren entsprechende Schalungselemente eingesetzt, von denen in Fig. 7 bei 44 lediglich zwei Kernschalwände angedeutet sind, die um ein Maß z in Längsachse der Raumzelle 10 verfahrbar sind. Nach Guß der Zwischenwand 18 werden -- wie gesagt -- die faltbaren Schalungskerne 36 eingesetzt und in Frischbetonzustand der Zwischenwand 18 die anderen Teile 12 bis 16 der Raumzelle 10 angegossen.

Der Schalungskern 36 der Transformatorenkammer 20 in Fig. 7 wird hydraulisch oder mechanisch um etwa 80 cm in Zellenlängsrichtung vom Schalungskern 36 des Schaltraumes 22 abgerückt, um an oder zwischen die Kernschalwände 44 für die Zwischenwand 18 Bewehrungslagen, Halfenschienen, C-Profile, Aussparungen, Dübel od. dgl. anbringen zu können.

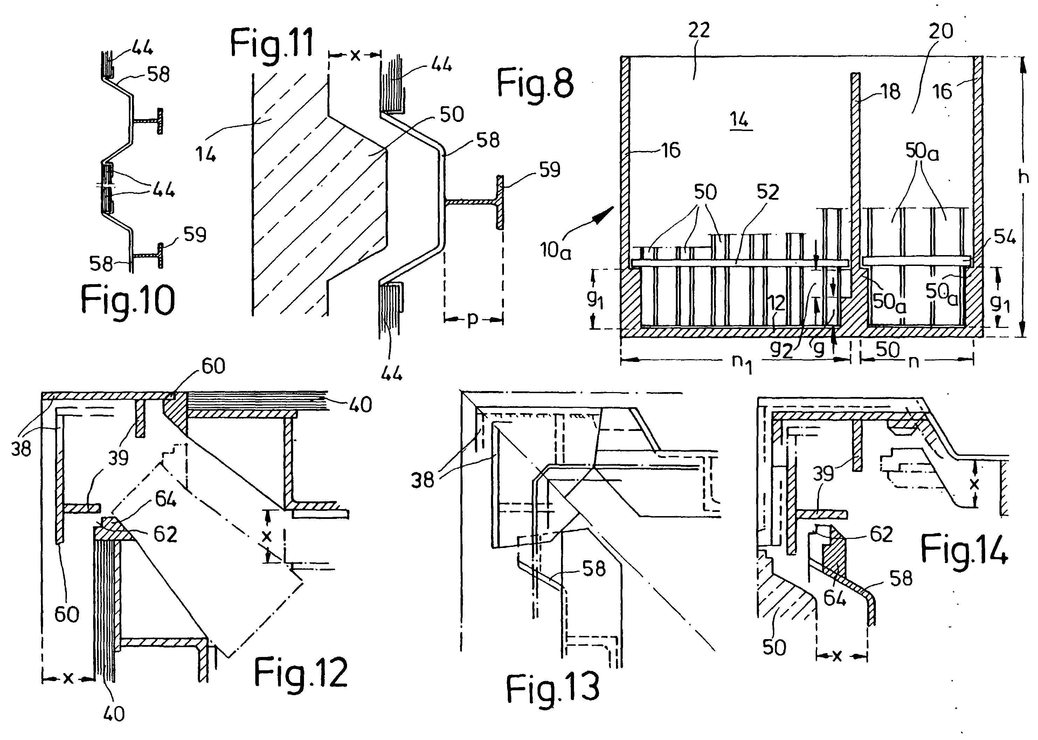

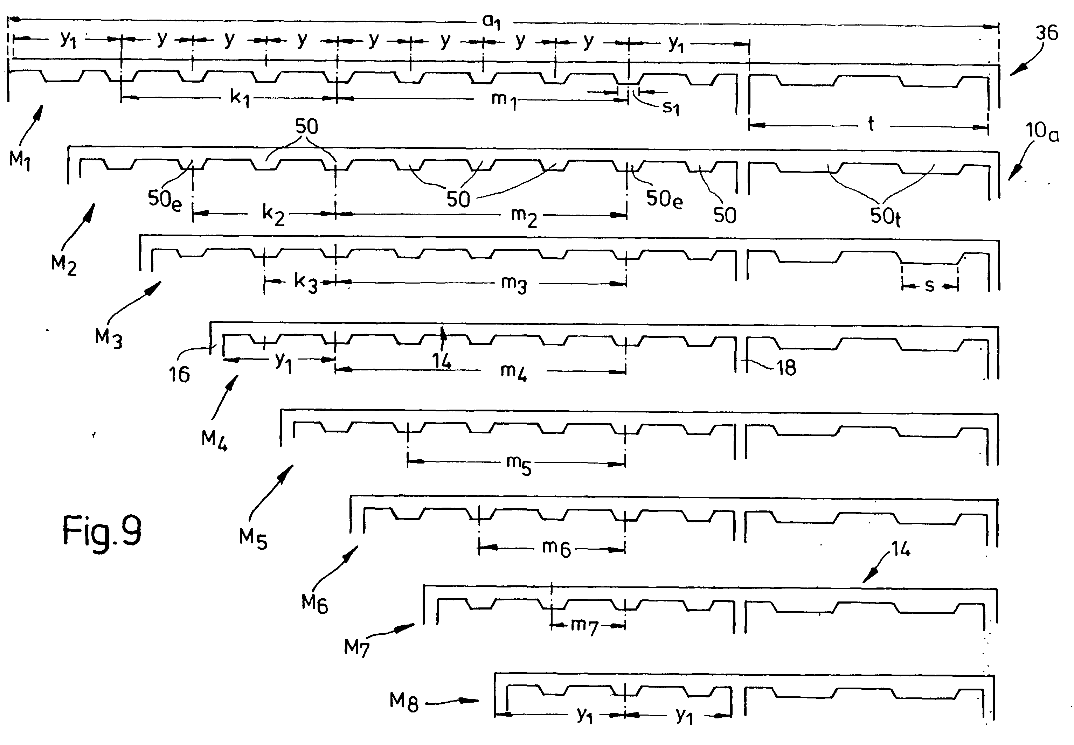

Fig. 8 zeigt eine Raumzelle 10ₐ mit quer zur Längsachse angeformten Rippen oder Wandvorlagen 50 bzw. 50ₐ, die in vorwählbarer Höhe g,g₁ als Auflager für Betonzwischenböden 52 bzw. Transformatorenschienen 53 hergestellt werden.

Ein System M₁ bis M₈ von unterschiedlichen Anordnungen der Wandvorlagen 50,50ₐ an Längswänden 14 unterschiedlicher Gesamtlänge a₁ verdeutlicht Fig. 9. In deren oberstem Beispiel mißt die Gesamtlänge a₁ etwa 8300 mm, von denen 2000 mm von der inneren Länge t der Transformatorenkammer 20 eingenommen werden. Der diese erfassende Längswandabschnitt ist mit zwei Wandvorlagen 50ₐ der Frontbreite s von 400 mm ausgestattet, die acht Wandvorlagen 50 des Schaltraumes 22 jeweils einer Frontbreite s₁ von 130 mm verlaufen in mittleren Abständen y von 600 mm zueinander. Die Endabstände y₁ der Endvorlagen 50ₑ zu Quer- und Zwischenwand 16 und 18 messen 940 mm. Zwischen den beiden Endvorlagen 50ₑ sind in Ausführung M₁ zwei Längen m₁ bzw. k₁ von 2400 bzw. 1800 mm zu erkennen; in M₂ mißt die Länge k₂ 1200 mm, in M₃ die Länge k₃ 600 mm. Ab Beispiel M₅ vermindern sich die Längen m₅ bis m₇ auf 1800 bzw. 1200 bzw. 600 mm.

Nicht alle Wandvorlagen 50,50ₐ -- etwa des Systembeispiels M₁ -- werden als Auflager für Betonplatten 52 benötigt, weshalb man beim Einschalen in Schalungsrinnen für nicht gewünschte Wandvorlagen 50,50ₐ Formkörper als Platzhalter einlegt. Doch schon zur Auflage von Zwischenbodenprofilen werden wegen der Spannweite erforderlicher Holzplatten sämtliche Wandvorlagen 50,50ₐ gebraucht.

Die Fig. 10 und 11 zeigen die Schalung der Wandvorlagen 50 durch eine Schalungsrinne bzw. ein Rinnenprofil 58 mit mittigem T-Profil 59 der Länge p von 79 mm. Dort ist ein Abrückmaß x von 70 mm für die Schalung vom Gußteil 10,10ₐ verdeutlicht.

Einen winkelförmigen Eckstiel 38 des Innenschalungskerns 36 zeigt Fig. 12; dessen abgeschrägte Kanten 60 greifen jeweils in einen Schulterabsatz 62 eines Endklotzes 64 der Schaltafel 40 ein. Die Schulterabsätze 62 können auch einen Steg 39 des Eckstiels 38 aufnehmen. Den Klappvorgang für den Schalungskern 36 lassen die Fig. 12 bis 14 ohne weiteres erkennen.

## Patentansprüche

1. Verfahren zum Herstellen einer wenigstens zwei durch eine Zwischenwand (18) getrennte Räume (20, 22) enthaltenden monolithischen Raumzelle (10, 10ₐ) aus Beton mit einem Boden (12) oder einer Decke und vier Umfassungswänden (14, 16) mittels eines Schalungskernes (36) mit festem Deckenspiegel (42), vier Eckstielen (38) od.dgl. Eckelementen, mindestens vier Wandschaltafeln sowie verfahrbaren Außenschalwänden (32), wobei beim Falten des Schalungskernes (36) die Wandschaltafeln (40) eingezogen werden,
**dadurch gekennzeichnet,**
**daß** in die Raumzelle (10, 10ₐ) vor dem Gießen der Umfassungswände (14, 16) die Zwischenwand (18) gegossen und monolithisch eingeformt wird, wobei in der Raumzelle (10, 10ₐ) die Zwischenwand (18) begrenzende Schalungseinrichtungen (36, 44) verfahrbar angeordnet werden.

2. Verfahren nach Anspruch 1, **dadurch gekennzeichnet, daß** beidseits der Zwischenwand (18) jeweils zumindest ein faltbarer Schalungskern (36) für die Umfassungswände (14, 16) eingesetzt wird.

3. Verfahren nach Anspruch 1 oder 2, **dadurch gekennzeichnet, dass** beidseits der Zwischenwand (18) eine verschiebliche Kernschalwand (44) für eine Fläche der Zwischenwand (18) sowie einen zu ihr in Abstand zu bringenden Schalungskern (36) für die Umfassungswände (14, 16) samt den/die in diese übergehenden Boden (12) oder Decke angeordnet wird.

4. Verfahren nach Anspruch 1 oder 2, bei dem an Wände (14, 16, 18) der Raumzelle (10, 10ₐ) auf die den Wandschaltafeln (40) gegenüberstehenden Bereiche nach innen ragende Wandleisten (26) monolithisch angefügt werden, **dadurch gekennzeichnet, daß** an wenigstens zwei einander gegenüberliegende Umfassungswände (14, 16) und/oder an eine Umfassungswand sowie die gegenüberliegende Fläche der Zwischenwand (18) während des Betonierens bodenparallel Wandleisten (26) und/oder rechtwinkelig dazu verlaufende Wandvorlagen (50, 50ₐ, 50ₑ) angeformt werden.

5. Monolithische Betonraumzelle mit einem Boden oder einer Decke, vier Umfassungswänden (14, 16) sowie wenigstens zwei durch eine Zwischenwand (18) getrennten Räumen (20, 22), welche nach dem Verfahren gemäß einem der voraufgehenden Ansprüche mittels eines Schalungskerns (36) mit festem Deckenspiegel (42), vier Eckstielen (38), mindestens vier Wandschaltafeln (40) sowie verfahrbaren Außenschalwänden (32) gegossen ist, wobei an Wände (14, 16) nach innen ragende Wandleisten (26) monolithisch angefügt sind, **dadurch gekennzeichnet, daß** die Zwischenwand (18) an die Umfassungswände (14, 16) der Raumzelle (10,10ₐ) und den Boden (12) oder die Decke monolithisch gasdicht anbetoniert ist, und dass als Wandleisten an wenigstens zwei gegenüberliegenden Wandflächen parallel zur Zwischenwand (18) verlaufende Wandvorlagen (50, 50ₐ, 50ₑ) angeformt sind.

6. Betonraumzelle nach Anspruch 5, **dadurch gekennzeichnet, daß** die Wandvorlage (50, 50ₐ, 50ₑ) sich von der zugeordneten Wandfläche ab querschnittlich verjüngt.

7. Betonraumzelle nach Anspruch 5, **dadurch gekennzeichnet, dass** die Zwischenwand (18) einen Schaltraum von einem Transformatorenraum trennt und die Wandvorlagen (50ₐ) des Transformatorenraumes (20) etwa die doppelte Frontbreite (s₁) der Wandvorlagen (50) im Schaltraum (22) aufweisen.

8. Betonraumzelle nach Anspruch 5, **dadurch gekennzeichnet, daß** die Wandvorlagen (50, 50ₑ) des Schaltraums (22) zueinander gleiche Abstände (y) aufweisen und die Endabstände (y1) zu den seitlich begrenzenden Wänden (14, 14; 16, 18) etwa das 1,5fache der Abstände (y) zwischen den Wandvorlagen (50, 50ₑ) messen.

9. Betonraumzelle nach Anspruch 7 oder 8, **gekennzeichnet durch** ein Rastersystem (M₁ bis M₈) der Längswand (14) im Bereich des Schaltraumes (22) und eine zwischen deren beiden Endabständen (y₁) abnehmende Anzahl der Wandvorlagen (50) gleichbleibenden Abstandes (y).

## Claims

1. Method for the manufacture of a monolithic concrete room cell (10, 10ₐ) containing at least two rooms (20, 22) separated by a partition (18) with a floor (12) or a roof and four containing walls (14, 16) by means of a shuttering core (36) with a fixed roof panel (42), four corner posts (38) or the like corner elements, at least four wall shuttering panels and movable outer shuttering walls (32), wherein on folding the shuttering core (36) the wall shuttering panels (40) are pulled in, **characterised in that** the partition (18) is cast and formed monolithically in the room cell (10, 10ₐ) before casting the containing walls (14, 16), wherein shuttering devices (36, 44) which bound the partition (18) are arranged movably in the room cell (10, 10ₐ).

2. Method according to claim 1, **characterised in that** on both sides of the partition (18) in each case at least one folding shuttering core (36) is inserted for the containing walls (14, 16).

3. Method according to claim 1 or 2, **characterised in that** on both sides of the partition (18) is arranged a slidable core shuttering wall (44) for one surface of the partition (18) as well as a shuttering core (36) to be set at a distance from the latter for the containing walls (14, 16) together with the floor (12) or roof merging with the latter.

4. Method according to claim 1 or 2, in which monolithically attached to walls (14, 16, 18) of the room cell (10, 10ₐ) are wall bars (26) extending inwards onto the regions opposite the wall shuttering panels (40), **characterised in that** wall bars (26) and/or wall bases (50, 50ₐ, 50ₑ) running at right angles thereto are formed parallel to the floor integrally with at least two mutually opposed containing walls (14, 16) and/or with one containing wall and the opposite surface of the partition (18) during concreting.

5. Monolithic concrete room cell with a floor or a roof, four containing walls (14, 16) and at least two rooms (20, 22) separated by a partition (18), which by the method according to any of the preceding claims is cast by means of a shuttering core (36) with a fixed roof panel (42), four corner posts (38), at least four wall shuttering panels (40) and movable outer shuttering walls (32), wherein inwardly extending wall bars (26) are monolithically attached to walls (14, 16), **characterised in that** the partition (18) is monolithically and gas-tightly concreted on to the containing walls (14, 16) of the room cell (10, 10ₐ) and the floor (12) or roof, and **in that** wall bases (50, 50ₐ, 50ₑ) running parallel to the partition (18) are formed integrally with at least two opposed wall surfaces as the wall bars.

6. Concrete room cell according to claim 5, **characterised in that** the wall base (50, 50ₐ, 50ₑ) tapers cross-sectionally from the associated wall surface.

7. Concrete room cell according to claim 5, **characterised in that** the partition (18) separates a switch room from a transformer room and the wall bases (50ₐ) of the transformer room (20) have roughly twice the front width (s₁) of the wall bases (50) in the switch room (22).

8. Concrete room cell according to claim 5, **characterised in that** the wall bases (50, 50ₑ) of the switch room (22) have equal gaps (y) from each other and the end gaps (y1) from the laterally defining walls (14, 14; 16, 18) measure roughly 1.5 times the gaps (y) between the wall bases (50, 50ₑ).

9. Concrete room cell according to claim 7 or 8, **characterised by** a grid system (M₁ to M₈) of the longitudinal wall (14) in the region of the switch room (22) and a decreasing number of wall bases (50) of constant spacing (y) between their two end gaps (y₁).

## Revendications

1. Procédé de fabrication d'une cabine (10, 10ₐ) monolithique en béton, contenant au moins deux cellules (20, 22) séparées par une cloison (18) et comprenant un fond (12) ou une paroi de couverture et quatre parois périphériques (14, 16), au moyen d'un moule de coffrage (36), qui comporte une surface de couverture (42), quatre montants d'angle (38) ou éléments d'angle analogues, au moins quatre panneaux de coffrage latéraux, ainsi que quatre parois de coffrage extérieures (32) mobiles, les panneaux de coffrage latéraux (40) étant rabattus vers l'intérieur au moment du pliage du moule de coffrage (36), **caractérisé en ce que** la cloison (18) est coulée et moulée sous forme monolithique dans la cabine (10, 10ₐ) avant le moulage des parois périphériques (14, 16), des dispositifs de coffrage (36, 44), délimitant la cloison (18), étant disposés de manière mobile dans la cabine (10, 10ₐ).

2. Procédé selon la revendication 1, **caractérisé en ce que**, de part et d'autre de la cloison (18), on pose au moins un moule de coffrage (36) pour les parois périphériques (14, 16).

3. Procédé selon la revendication 1 ou 2, **caractérisé en ce que**, de part et d'autre de la cloison (18), sont disposés une paroi de coffrage de moulage (44) mobile pour une face de la cloison (18), ainsi qu'un moule de coffrage (36), disposé à une distance donnée de celle-ci, pour les parois périphériques (14, 16), y compris le fond (12) ou la paroi de couverture qui se prolonge dans celles-ci.

4. Procédé selon la revendication 1 ou 2, dans lequel des nervures murales (26) orientées vers l'intérieur, sont réalisées sous forme monolithique contre les parois (14, 16, 18) de la cabine (10, 10ₐ), sur les zones en face des panneaux de coffrage latéraux (40), **caractérisé en ce que**, pendant le coulage du béton contre au moins deux parois périphériques (14, 16) en regard l'une de l'autre et/ou contre une paroi périphérique, ainsi que contre la surface opposée de la cloison (18), des nervures murales parallèles au fond (26) et/ou des saillies murales (50, 50ₐ, 50ₑ) s'étendant perpendiculaires à celles-ci, sont moulées.

5. Cabine monolithique en béton comprenant un fond ou une paroi de couverture, quatre parois périphériques (14, 16), ainsi qu'au moins deux cellules (20, 22) séparées par une cloison (18), cabine qui est moulée selon le procédé selon l'une des revendications précédentes au moyen d'un moule de coffrage (36) avec une surface de couverture (42) fixe, quatre montants d'angle (38), au moins quatre panneaux de coffrage latéraux (40), ainsi que quatre parois de coffrage extérieures (32) mobiles, des nervures murales (26), orientées vers l'intérieur, étant réalisées sous forme monolithique contre les parois (14, 16), **caractérisé en ce que** la cloison (18) est bétonnée de manière étanche aux gaz, sous forme monolithique, contre les parois périphériques (14, 16) de la cabine (10, 10ₐ) et contre le fond (12) ou la paroi de couverture, et **en ce que** des saillies murales (50, 50ₐ, 50ₑ), parallèles à la cloison (18), sont moulées sous forme de nervures murales contre au moins deux surfaces de paroi en regard l'une de l'autre.

6. Cabine en béton selon la revendication 5, **caractérisée en ce que** les saillies murales (50, 50ₐ, 50ₑ) ont une section se rétrécissant à partir de la surface murale correspondante.

7. Cabine en béton selon la revendication 5, **caractérisée en ce que** la cloison (18) forme la séparation entre une cellule de commande et une cellule pour transformateur et les saillies murales (50ₐ) de la cellule pour transformateur (20) présentent pratiquement une largeur frontale au moins du double de celle (s₁) des saillies murales (50) dans la cellule de commande (22).

8. Cabine en béton selon la revendication 5, **caractérisée en ce que** les saillies murales (50, 50ₑ) de la cellule de commande (22) sont disposées à une distance (y) régulière les unes des autres et les distances aux extrémités (y₁) par rapport aux parois (14, 14 ; 16, 18) de délimitation latérales mesurent pratiquement 1,5 fois la distance (y) entre deux saillies murales (50, 50ₑ).

9. Cabine en béton selon la revendication 7 ou 8, **caractérisée par** un système de réseau (M₁ à M₈) sur la paroi longitudinale (14) dans la zone de la cellule de commande (22) et par un nombre décroissant des saillies murales (50), à distance égale (y) les unes des autres, entre les deux distances (y₁) aux extrémités de ladite cellule de commande.
